# EUROPÄISCHE PATENTSCHRIFT

(11) **EP 2 342 428 B1**
(45) Veröffentlichungstag und Bekanntmachung des Hinweises auf die Patenterteilung: **25.06.2014**
(21) Anmeldenummer: 09778487.0
(22) Anmeldetag: 11.09.2009
(51) Int. Cl.: F01D 25/14

(54) **TWINSCROLL-ABGASTURBOLADER**
TWIN SCROLL EXHAUST GAS TURBOCHARGER
TURBOCOMPRESSEUR À DOUBLE ENTRÉE

(30) Priorität: 07.11.2008 DE 102008056358
(43) Veröffentlichungstag der Anmeldung: 13.07.2011
(73) Patentinhaber: Bayerische Motoren Werke Aktiengesellschaft, 80809 München (DE)
(72) Erfinder: FAHL, Thomas, 80538 München (DE)
(86) Internationale Anmeldenummer: PCT/EP2009/006612
(87) Internationale Veröffentlichungsnummer: WO 2010/051876

(56) Entgegenhaltungen:
- EP-A1- 1 536 141
- WO-A1-2009/012989
- WO-A2-2007/035972
- DE-A1- 19 653 057
- DE-C1- 4 242 494
- FR-A1- 2 878 562
- JP-A- 57 137 619

## Beschreibung

Die Erfindung betrifft einen Twinscroll-Abgasturbolader mit den Merkmalen aus dem Oberbegriff des Patentanspruchs 1.

Sie geht von der japanischen Offenlegungsschrift JP-A-3-151519 aus. Aus dieser ist ein Twinscroll-Abgasturbolader für eine mehrzylindrige Brennkraftmaschine bekannt. Der Twinscroll-Abgasturbolader weist ein Turbinengehäuse mit einem ersten und einem zweiten, durch das Turbinengehäuse voneinander getrennten Einlasskanälen auf. Beide Einlasskanäle münden jeweils in einen ersten und einen zweiten Spiralkanal, die sich radial außen, weitgehend parallel zueinander um eine drehbar gelagerte Abgasturbine erstrecken. Beide Einlasskanäle werden entsprechend der Zündfolge der Brennkraftmaschine von unterschiedlichen Zylindern der Brennkraftmaschine mit Abgas beaufschlagt, wodurch ein vergleichmäßigter Antrieb der Abgasturbine erfolgt. Die Gaseinlasskanäle und die Spiralkanäle sind derart angeordnet, dass das Abgas von gegenüberliegenden Seiten auf die Abgasturbine geleitet wird.

Nachteilig an der bekannten Ausgestaltung ist eine hohe Temperaturbelastung des Turbinengehäuses.

Aufgabe der vorliegenden Erfindung ist es, den oben ganannten Nachteil zu vermeiden.

Diese Aufgabe wird durch die Merkmale im kennzeichnenden Teil des Patentanspruchs 1 gelöst.

Durch die erfindungsgemäße Ausgestaltung wird im Bereich der Gaseinlasskanäle eine Überhitzung des Turbinengehäuses sicher vermieden. Weiter wird durch die erfindungsgemäße Ausgestaltung weniger Wärme in den Motorraum abgestrahlt, wodurch die Wärmeschutzmaßnahmen reduziert werden können, was zu einer weiteren Kosteneinsparung führt.

Da eine Überhitzung des Turbinengehäuses aufgrund der erfindungsgemäßen Ausgestaltung sicher vermieden ist, kann das Turbinengehäuse in einer weiteren besonders bevorzugten Ausführungsform aus einem Leichtmetallwerkstoff, insbesondere Aluminium, gefertigt werden. Durch diese Maßnahme wird das Gewicht des Abgasturboladers in vorteilhafter Weise gesenkt. Weiter werden in vorteilhafter Weise die Fertigungskosten reduziert, da aufgrund der Zusatzkühlung auf einen billigeren Turbinengehäusewerkstoff zurückgegriffen werden kann.

Auch das Dichtungsproblem wird bei einer Ausführung gemäß Patentanspruch 2 wesentlich vereinfacht, da eine einfachere thermische Anbindung des Abgasturboladers an den Zylinderkopf bzw. das Kurbelgehäuse möglich ist, wenn diese ebenfalls aus einem Leichtmetallwerkstoff (gleicher oder ähnlicher Wärmeausdehnungskoeffizient) gefertigt sind.

Die Ausgestaltung gemäß Patentanspruch 3 dient zur Aufheizung des Turbinengehäuses nach einem Kaltstart der Brennkraftmaschine, wodurch die Verlustenergie beim Katalysatorheizen reduziert wird. Zum Heizen des Heizelementes kann beispielsweise die rekuperierte Energie aus der Batterie eines Mild-Hybrides verwendet werden.

Definition **Mild-Hybrid:** Ein Elektromotor, der den herkömmlichen Anlasser und Generator ersetzt, startet und unterstützt den Verbrennungsmotor. Außerdem wird das fahrdynamische Potenzial des Benzinmotors erhöht (Boost-Effekt). Gleichzeitig werden Verbrauchsvorteile von rund 15% erzielt. Elektromotor und Batterien sind nicht für das Fahren im reinen Elektrobetrieb ausgelegt.

Das Heizelement gemäß Patentanspruch 4 ist ein besonders bevorzugtes Heizelement.

Im Folgenden ist die Erfindung anhand eines besonders bevorzugten Ausführungsbeispieles in einer einzigen Figur näher erläutert.

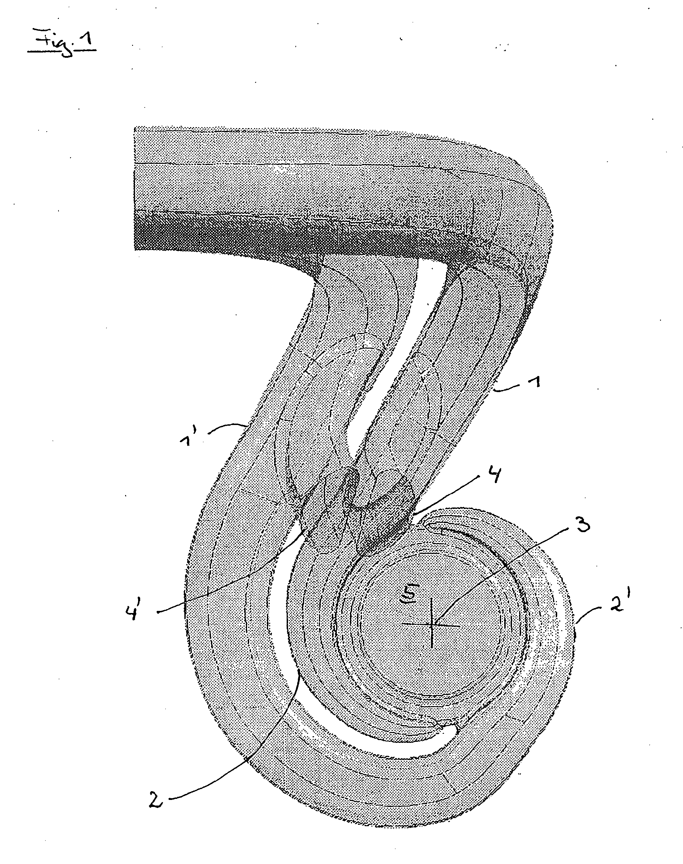

- Fig. 1: zeigt die Aufsicht auf ein Drahtgittermodell von Gas führenden Kanälen für einen erfindungsgemäßen Twinscroll-Abgasturbolader für eine Brennkraftmaschine.

Fig. 1 zeigt eine dreidimensionale Aufsicht auf ein Drahtgittermodell von Gas führenden Kanälen für einen erfindungsgemäßen Twinscroll-Abgasturbolader für eine Brennkraftmaschine. Dargestellt sind in dem Drahtgittermodell ein erster Gaseinlasskanal 1 und ein zweiter Gaseinlasskanal 1', wobei der erste Gaseinlasskanal in einen ersten Spiralkanal 2 und der zweite Gaseinlasskanal 1' in einen zweiten Spiralkanal 2' übergeht. Von den zwei Spiralkanälen 2, 2' wird ein Abgasturbinenraum 5 weitgehend umschlossen, in dem eine nicht dargestellte Abgasturbine anordenbar ist. Eine Drehachse der Abgasturbine ist mit 3 beziffert. Die Spiralkanäle umschlingen den Abgasturbinenraum 5 radial außen, jeweils mit einem Umschlingungswinkel kleiner als 180°, wobei die Spiralkanäle 2, 2' nicht parallel nebeneinander angeordnet sind. Darüber hinaus zweigen vom ersten und vom zweiten Gaseinlasskanal 1, 1' jeweils ein erster und ein zweiter Bypasskanal 4, 4' ab, die in anderen Ausführungsbeispielen auch entfallen können.

Die Gaseinlasskanäle 1, 1' sind zumindest abschnittsweise parallel zueinander in dem nicht dargestellten Turbinengehäuse und radial bezüglich der Drehachse 3 voneinander beabstandet angeordnet. Hierbei erstreckt sich der erste Spiralkanal 2, der sich an den näher an der Drehachse 3 angeordneten ersten Gaseinlasskanal 1 anschließt knapp 180° um die Abgasturbine. Der zweite Spiralkanal 2', der sich an den weiter von der Drehachse 3 entfernten zweiten Gaseinlasskanal 1' anschließt, erstreckt sich weitgehend um den übrigen Umfang um die Abgasturbine herum. Ein sinnvoller Umschlingungswinkel der Spiralkanäle 2, 2' um den Abgasturbinenraum 5 herum beträgt zwischen 90° und 180°, so dass keine Überschneidung der Spiralkanäle 2, 2' erfolgt. Durch diese Ausgestaltung wird eine Überhitzung des Turbinengehäuses insbesondere im Bereich der Spiralkanäle 2, 2' vermieden.

Erfindungsgemäß weist das Turbinengehäuse zumindest zwischen den Gaseinlasskanälen 1,1' zumindest einen, in Fig. 1 nicht dargestellten Kühlmittelkanal auf, der von einem Kühlmittel durchströmbar ist. Hier kann es sich beispielsweise um ein flüssiges oder gasförmiges Kühlmittel handeln. Als flüssiges Kühlmittel kommt vorzugsweise ein brennkraftmaschineneigenes Kühlmittel zum Einsatz. Auch eine Kühlung mit Luft ist möglich. Durch diese Maßnahme wird eine Überhitzung des Turbinengehäuses nochmals reduziert.

Da durch die oben aufgeführten Maßnahmen eine Überhitzung des Turbinengehäuses vermieden ist, kann dieses in vorteilhafter Weise aus einem Leichtmetallwerkstoff, wie z. B. Aluminium, kostengünstig gefertigt werden.

In einem weiteren, besonders bevorzugten Ausführungsbeispiel kann in den Kühlmittelkanal ein Heizelement, bevorzugt ein PTC (positive temperature coefficient) angeordnet werden. Diese Maßnahme dient zur Aufheizung des Turbinengehäuses nach einem Kaltstart der Brennkraftmaschine und führt somit zu einer Reduzierung der Verlustenergie beim Katalysatorheizen. In vorteilhafter Weise kann hierfür die rekuperierte Energie aus der Batterie eines Mild-Hybriden, wie oben definiert, verwendet werden.

Durch die erfindungsgemäße Ausgestaltung kann ein wassergekühlter Twinscroll-Abgasturbolader beispielsweise mit einem Waste-Gate dargestellt werden. Weiter führt die erfindungsgemäße Ausgestaltung zu einer Reduzierung des Gewichts des Abgasturboladers sowie der Kosten, da billigere Materialien, wie beispielsweise Leichtmetallwerkstoffe für die Herstellung des Turbinengehäuses verwendet werden können. Darüber hinaus ist eine einfachere thermische Anbindung des Abgasturboladers an einen Leichtmetall-Zylinderkopf bzw. ein Leichtmetall-Kurbelgehäuse aufgrund der gleichen oder ähnlichen Wärmeausdehnungskoeffizienten möglich. Auch die Abdichtung zwischen einem Leichtmetall-Zylinderkopf bzw. einem Leichtmetall-Kurbelgehäuse und einem Leichtmetall-Turbinengehäuse ist wesentlich unkritischer bezüglich thermischer Verzüge und somit Undichtigkeiten. Als weiterer Vorteil ist noch der geringere Wärmeeintrag in den Motorraum zu erwähnen, wodurch die Wärmeschutzmaßnahmen im Motorraum reduziert werden können, wodurch ebenfalls ein Kosten- und Gewichtsvorteil entsteht.

### Bezugszeichenliste:

- 1.: erster Gaseinlasskanal
- 1': zweiter Gaseinlasskanal
- 2.: erster Spiralkanal
- 2': zweiter Spiralkanal
- 3.: Drehachse
- 4.: erster Bypasskanal
- 4': zweiter Bypasskanal
- 5.: Turbinenraum

## Patentansprüche

1. Twinscroll-Abgasturbolader für eine Brennkraftmaschine, mit einem Turbinengehäuse und mit einem ersten und einem zweiten, durch das Turbinengehäuse von einander getrennten Gaseinlasskanal (1, 1'), die in einen ersten und einen zweiten Spiralkanal (2, 2') münden, die sich um eine, um eine Drehachse (3) drehbare Abgasturbine des Twinscroll-Abgasturboladers radial außen erstrecken,
wobei die Gaseinlasskanäle (1, 1') zumindest abschnittsweise parallel zueinander in dem Turbinengehäuse und radial bezüglich der Drehachse (3) von einander beabstandet sind, wobei sich der erste Spiralkanal (2), der sich an den näher an der Drehachse (3) angeordnete ersten Gaseinlasskanal (1) anschließt, bis zu 180° um die Abgasturbine erstreckt und sich der zweite Spiralkanal (2'), der sich an den weiter von der Drehachse (3) entfernten zweiten Gaseinlasskanal (1') anschließt, bis zu 180° um den übrigen Umfang um die Abgasturbine herum erstreckt,
**dadurch gekennzeichnet, dass** das Turbinengehäuse zumindest zwischen den Gaseinlasskanälen (2, 2') zumindest einen Kühlmittelkanal aufweist, der von einem Kühlmittel durchströmbar ist.

2. Twinscroll-Abgasturbolader nach Patentanspruch 1,
**dadurch gekennzeichnet, dass** das Turbinengehäuse aus einem Leichtmetallwerkstoff, insbesondere Aluminium ist.

3. Twinscroll-Abgasturbolader nach Patentanspruch 1 oder 2,
**dadurch gekennzeichnet, dass** in dem Kühlmittelkanal ein Heizelement anordenbar ist.

4. Twinscroll-Abgasturbolader nach Patentanspruch 3,
**dadurch gekennzeichnet, dass** das Heizelement ein PTC-Element (positive temperature coefficient) ist.

## Claims

1. A twin-scroll turbocharger for an internal combustion engine, comprising a turbine casing and first and second gas inlet ducts (1, 1') separated by the turbine casing and opening into a first and a second spiral duct (2, 2') which extend radially outwards around an exhaust gas turbine of the twin scroll turbocharger, rotatable around an axis (3),
wherein the gas inlet ducts (1, 1'), or at least parts thereof, are spaced apart, parallel in the turbine casing and radially relative to the axis (3), wherein the first spiral duct (2), which adjoins the first gas inlet duct (1) nearer the axis (3), extends up to 180 round the exhaust gas turbine and the second spiral duct (2'), which adjoins the second gas inlet duct (1) more remote from the axis (3), extends up to 180 round the rest of the periphery round the exhaust gas turbine,
**characterised in that** the turbine casing, at least between the gas inlet ducts (2, 2'), has at least one coolant duct through which a coolant can flow.

2. A twin-scroll turbocharger according to claim 1,
**characterised in that** the turbine casing is made of a light metal material, particularly aluminium.

3. A twin-scroll turbocharger according to claim 1 or claim 2,
**characterised in that** a heating element is disposable in the coolant duct.

4. A twin-scroll turbocharger according to claim 3,
**characterised in that** the heating element is a PTC (positive temperature coefficient) element.

## Revendications

1. Turbocompresseur de gaz d'échappement à double hélice pour un moteur à combustion interne comprenant un boitier de turbine et un premier et un second canal d'entrée des gaz (1, 1') séparés l'un de l'autre par le boitier de turbine, et qui débouchent dans un premier et dans un second canal en hélice (2, 2') qui s'étendent radialement vers l'extérieur autour d'une turbine de gaz d'échappement du turbocompresseur de gaz d'échappement à double hélice mobile en rotation autour d'un axe de rotation (3),
les canaux d'entrée des gaz (1, 1') étant au moins par segments parallèles l'un à l'autre dans le boitier de turbine et étant situés à distance radiale l'un de l'autre par rapport à l'axe de rotation (3), le premier canal en hélice (2) qui se raccorde au premier canal d'entrée des gaz (1) le plus proche de l'axe de rotation (3) s'étendant jusqu'à 180° autour de la turbine de gaz d'échappement, tandis que le second canal en hélice (2') qui se raccorde au second canal de gaz d'échappement (1') plus éloigné de l'axe de rotation (3) s'étend jusqu'à 180° autour de la périphérie restante de la turbine de gaz d'échappement,
**caractérisé en ce que**
le boitier de la turbine comporte, au moins entre les canaux d'entrée des gaz (2, 2') au moins un canal de fluide de refroidissement pouvant être parcouru par un fluide de refroidissement.

2. Turbocompresseur de gaz d'échappement à double hélice conforme à la revendication 1,
**caractérisé en ce que**
le boitier de la turbine est réalisé en un matériau métallique léger, en particulier en aluminium.

3. Turbocompresseur de gaz d'échappement à double hélice conforme à la revendication 1 ou 2,
**caractérisé en ce qu'**
un élément chauffant peut être monté dans le canal de fluide de refroidissement.

4. Turbocompresseur de gaz d'échappement à double hélice conforme à la revendication 3,
**caractérisé en ce que**
l'élément chauffant est un élément PTC (à coefficient de température positif).
